# EUROPEAN PATENT SPECIFICATION

(11) **EP 3 701 238 B1**
(45) Date of publication and mention of the grant of the patent: **15.01.2025**
(21) Application number: 18707967.8
(22) Date of filing: 10.02.2018
(51) Int. Cl.: G01M 3/00, G01M 3/02, G01M 3/04

(54) **METHOD AND SYSTEM FOR CHARACTERIZATION OF A BAG FOR BIOPHARMACEUTICAL FLUID CONTENT**
VERFAHREN UND SYSTEM ZUR CHARAKTERISIERUNG EINES BEUTELS FÜR BIOPHARMAZEUTISCHEN FLUIDINHALT
PROCÉDÉ ET SYSTÈME DE CARACTÉRISATION D'UN SAC POUR CONTENU DE FLUIDE BIOPHARMACEUTIQUE

(30) Priority: 24.10.2017 IN 201741037624
(43) Date of publication of application: 02.09.2020
(73) Proprietor: Sartorius Stedim India Pvt. Ltd., Bangalore, Karnataka 562123 (IN); Sartorius Stedim FMT, 13400 Aubagne (FR)
(72) Inventor: MONTENAY, Nelly, 13790 Rousset (FR); HOGREVE, Marc, 37139 Adelebsen (DE); VICARD, Quentin, 42330 ST MÉDARD EN FOREZ (FR); PARAMATHMA, Anil Kumar, Bangalore, Karnataka 562123 (IN)
(74) Representative: Novagraaf International SA
(86) International application number: PCT/IB2018/000090
(87) International publication number: WO 2019/081971

(56) References cited:
- EP-A1- 1 925 356
- WO-A1-2014/060016

## Description

The invention relates to the field of methods for characterization of bags for biopharmaceutical fluid content.

More precisely, the invention relates to the field of bags for biopharmaceutical fluid content.

In recent years, bags have been increasingly proposed for containing, transporting, transforming or transferring biopharmaceutical fluid content. These bags are replacing the rigid stainless steel tanks that were previously used for these functions. These flexible bags, which can hold from one liter to one thousand liters, are often referred to as "single-use" because once they have been used they are not processed for reuse as tanks are, but are discarded.

The term "biopharmaceutical fluid" is understood to mean culture media, cell cultures, buffer solutions, artificial nutrition liquids, any fluid resulting from biotechnology, a pharmaceutical fluid, or more generally a fluid intended for use in the medical field.

The integrity of the bag is important to ensuring its use under proper conditions. A defect in its integrity can mean a leak and therefore a loss of product contained in the bag, which can be undesirable from an economic point of view. But more importantly, a loss of integrity implies that the contents of the bag may have been contaminated by the outside environment, and in this case it is the entire product contained in the bag, as well as any product resulting from the use of the bag, which is potentially contaminated and may need to be discarded. Great effort is therefore made to guarantee the integrity of the bag.

There are several categories of technologies for testing bag integrity. According to a first technology, the bag manufacturer can apply an integrity test after manufacture and before any delivery, storage, or use of the bag. One problem is that such an integrity test does not take into account the subsequent conditions of delivery, storage, or use of the bag, and may therefore be overengineered for the subsequent conditions of delivery, storage, or use of the bag. Moreover, since the test is overengineered, it can introduce defects into a bag that did not have any before the test and thus increase the risk of loss of integrity, which is even worse.

Another technology consists of monitoring the integrity of the bag until just before its use. This makes it possible for the integrity test to cover the storage and delivery stages, which are subsequent to its manufacture, until it is used. It is known to contain the bag in an outer pouch, the space between the bag and the outer pouch containing a colorimetric detection layer capable of detecting the possible presence of a tracer gas within the space. One problem with this technology, however, is that it is quite expensive and makes it complex to use the bag.

Another technology consists of testing the integrity of the bag after use. However, one problem is that if this test reveals a defect in its integrity, all production carried out using the bag is potentially contaminated and may have to be thrown away for safety. In addition, the test can damage an intact bag and detect an integrity defect due to the test itself, which is also unfortunate.

Whatever test is used, there is also the issue of the test revealing an integrity defect in absolute terms, but which is not problematic for the application. Such is the case, for example, if the test reveals a certain porosity in the film of the bag, but the porosity by itself is not an issue for the application.

A problem therefore arises related to the importance of offering bag users greater certainty regarding the integrity of their bags.

Further prior art can be found in EP 1 925 356 A1 and WO 2014/060016 A1. EP 1 925 356 A1 describes methods and systems for assessing the integrity of porous materials, such as membranes that may be used in filtration devices. The method involves applying a differential pressure across the material.

The present invention is defined by the independent claims 1 and 8.

Optional features are recited in the dependent claims.

A description of the invention is given below.

According to a first aspect, the object of the invention is a method for characterization of a calibrated defect of a film of a bag for biopharmaceutical fluid, the method being as defined in claim 1.

With these arrangements, the characteristics of the films are determined beforehand.

It is thus possible to determine which critical levels of defect are likely to lead to leakage in a bag composed of the film.

According to one embodiment, the characteristics of the fluid stresses comprise one or more of:
- a hydrostatic pressure of a fluid applied to the bag film sample provided with a calibrated defect,
- a viscosity of a fluid applied to the bag film sample provided with a calibrated defect.

According to one embodiment, the characteristics of the bag film sample (3) provided with a calibrated defect comprise one or more of:
- an identifier of a constituent film of a bag,
- a thickness of a constituent film of a bag,
- a defect of the bag film sample (3).

According to one embodiment, a calibrated defect is applied to the bag film sample.

According to one embodiment, the calibrated defect applied to the bag film sample is measured.

According to one embodiment, the leak test includes the application of a column of fluid of known height, known viscosity, known temperature, under known ambient conditions, to a bag film sample of known material, known thickness, known defect, for a known duration, and the detection over time of the passage of said fluid through said bag film sample.

According to another aspect, the invention relates to a method for building a database, wherein the above method for characterization is implemented for different bag film samples provided with calibrated defects and for various controlled fluid stresses.

According to another aspect, the invention relates to a system for characterization of a calibrated defect of a film of a bag for biopharmaceutical fluid, the system being as defined in claim 8.

According to another aspect, the invention relates to a computerized method for obtaining characteristics of a film for a bag for biopharmaceutical fluid content, the computerized method is as defined in claim 10.

According to another aspect, not forming part of the claimed invention, there is a computerized method for characterization of a bag for biopharmaceutical fluid content, the bag comprising at least one film, wherein,
- the computer receives information relating to the use of the bag, provided by a user by means of an interface of a programmable machine, said information relating to the use of the bag comprising at least one of the following items of information: characteristics of the biopharmaceutical fluid to be contained in the bag, mechanical conditions of the bag use, ambient conditions, duration of the bag use, level of fluidtightness required for the bag,
- the computer determines characteristics of at least one film by comparing said information relating to the use of the bag with a database containing results of leak tests previously carried out for bag film samples provided with control defects subjected to various fluid stresses,
- the computer sends said characteristics for display on the interface by a processor.

According to embodiments, the computerized method may be as defined in any of the claims 11-13.

The figures of the drawings are now briefly described.
Figures 1a to 1f are schematic views of different steps of a method for testing the integrity of a film.
Figure 2 is a schematic view of a database.
Figure 3 is a schematic view of the system.
Figure 4 is a perspective view of a further embodiment of the system.

In the figures, the same reference number designates identical or similar elements.

The following is a detailed description of several embodiments of the invention, with examples and with reference to the drawings.

### Leak test

An example of a leak test conducted on a film sample is first described.

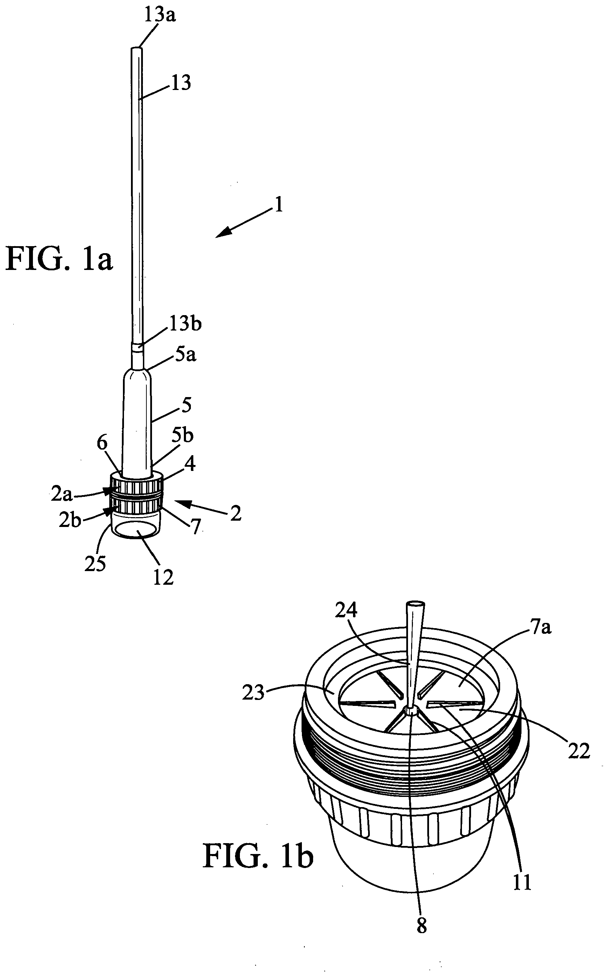

As can be seen in Figure 1a, the leak test device 1 comprises a housing 2. The housing 2 is in two parts. The housing 2 comprises an upper part 2a and a lower part 2b. The terms "upper" and "lower" are used in reference to the vertical direction, which is the direction of gravity. The present description is given by considering a functional orientation of the leak test device even if the leak test device could be placed in a different orientation, in particular when not in use. Furthermore, it is not impossible for the described leak test device, or variants thereof, to be functionally used in a different orientation than the one shown.

The two parts 2a, 2b of the housing are assembled together so as to define an interior space receiving the film to be tested 3. In practice, the two parts 2a, 2b of the housing are removably assembled one to the other, so that they can alternatively be placed in a disassembled configuration for installation of the film to be tested in the leak test device and in an assembled configuration for the actual test. In the example shown, the two parts 2a, 2b of the housing are removably assembled to one another by screwing. Other removable assembly technologies could be considered.

Thus, the film to be tested 3 separates the leak test device into two regions: an upstream region and a downstream region. According to the principle of the leak test, the upstream region comprises a fluid in contact with the test film, and the downstream region comprises a detector for detecting the presence of fluid from the upstream region in the downstream region. In the orientation shown for the leak test device, the film to be tested is placed horizontally, the upstream region being located above the test film 3 and the downstream region being located below the test film 3. Gravity can thus be used for the leak test.

The upper part 2a of the housing comprises a cover 4 and a tube 5 provided with a lower end flange 26. In the present case, these two functions are fulfilled by two separate parts connected to one another in a fluidtight manner. Thus, in the present application, when the term "fluidtight" is used, this refers to impermeability to the fluid used during the leak test under normal conditions for implementing the leak test. For example, in the present embodiment, an O-ring seal 27 is provided between the lower end flange 26 and the cover 4. The cover 4 enables a mechanical connection of the upper part 2a of the housing 2 to the lower part 2b of the housing 2. The tube 5 comprises two ends 5a, 5b, for example opposite one another. End 5a can be fluidly connected in a fluidtight manner to a source of fluid. End 5b faces the test film 3 in the test configuration. The cover 4 has a through opening 6, for example central in its upper face, for the passage of the tube 5 through the cover 4.

The tube 5 is graduated and/or may be connected in a fluidtight manner to a graduated tube 13. In the present case, a graduated tube 13 is connected in a fluidtight manner to the tube 5. The graduated tube 13 comprises two ends 13a, 13b, for example opposite ends. End 13a can be fluidly connected in a fluidtight manner to a source of fluid. End 13b is fluidly connected in a fluidtight manner to the upper end 5a of the tube 5. The graduated tube 13 is graduated so as to display the volume of fluid contained in the space above the test film 3 at the graduation level corresponding to the upper level of the fluid.

The lower part 2b of the housing 2 comprises a cover 7. The cover 7 enables a mechanical connection of the lower part 2b of the housing 2 to the upper part 2a of the housing 2. For example, in the example shown, covers 4 and 7 have complementary threads. The upper face 7a of cover 7 has a through-opening 8. In the exemplary embodiment shown, the upper face 7a of cover 7 comprises a central pocket 22 carrying pins 11 and defined by a peripheral shoulder 23. The through-opening 8 is arranged in the central pocket 22. A tapered conical tube 24 (visible before assembly in Figure 1b) extends downward from the through-opening 8. The lower part 2b of the housing 2 also comprises a rigid support 9. The support 9 has a planar upper face 9a. The support 9 is for example made of metal or plastic. For example, the support 9 is removably mounted on cover 7. For example, the support 9 is carried by pins 11 projecting from the upper face 7a of cover 7, so that the support 9 is laterally held by the peripheral shoulder 23. The support 9 has a through-opening 10 that is aligned, in the assembled configuration, with the through-opening 8 in the upper face 7a of cover 7.

The lower part 2b of the housing 2 also comprises a detector 12. The detector 12 is a consumable part replaced after each leak test. It is therefore removably assembled to cover 7. The detector 12 is arranged beneath the through-opening 8 in the upper face 7a of cover 7. In particular, the tapered conical tube 24 concentrates any fluid flowing from the through-opening 8 in the direction of a localized area of the detector 12. If necessary, the detector 12 is not part of the housing 2 but is arranged under the housing 2, the latter having a through-opening between the test film 3 and the detector 12. The detector 12 is, for example, contained in a container 25 assembled to cover 7.

The leak test device 1 may operate as follows.

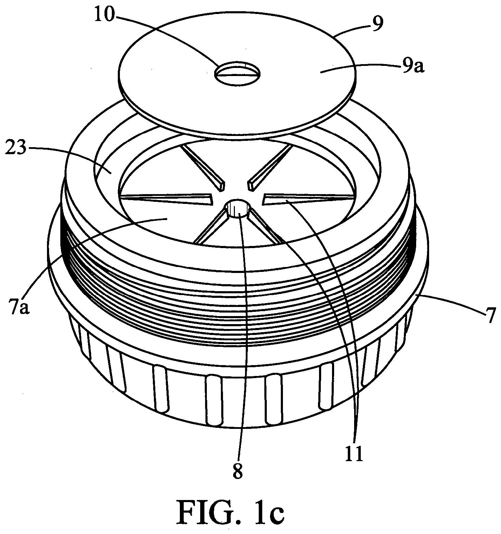

As represented in Figure 1a, the test film 3 is installed in the leak test device 1. To do so, if the leak test device 1 is assembled, the upper part 2a is disassembled from the lower part 2b. As represented in Figure 1b, the tapered conical tube 24 is installed in the lower part 2b. The detector 12 is placed in the container 25, and the container 25 is assembled to cover 7. If the support 9 is a removable support, as represented in Figure 1c, it is installed on cover 7. The through-opening 8 of the upper face 7a of cover 7 and the through-opening 10 of the support 9 are then aligned.

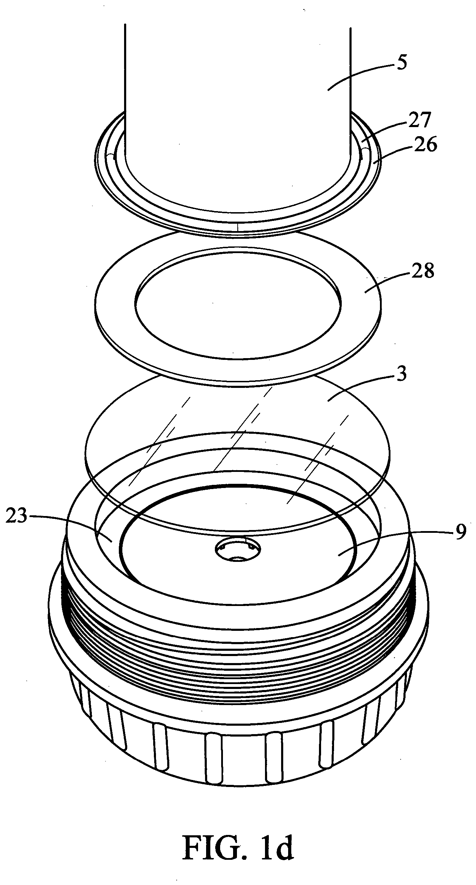

The test film sample 3 is then placed on the support 9, as represented in Figure 1d. The test film 3 has an inside surface intended to be placed in contact with the biopharmaceutical fluid and an opposite outside surface. The test film 3 is placed in the leak test device in the orientation corresponding to its future use: the inside surface facing the source of fluid and the outside surface facing the detector. The diameter of the test film sample 3 is smaller than the inside diameter of the housing 2. It has a diameter greater than the diameter of the support 9. The outside surface of the test film sample 3 is then resting on the support 9 and the peripheral shoulder 23.

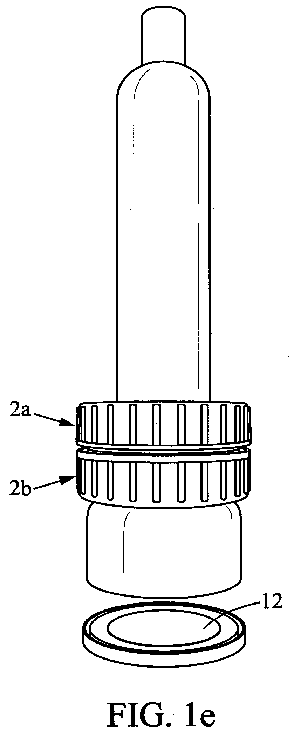

As represented in Figure 1e, the housing 2 is now assembled. The upper part 2a and the lower part 2b are assembled in a fluidtight manner. For example, a seal 28 is applied to the inside face of the test film sample 3, in particular on the peripheral portion of said film. The seal 28 is for example integral with the upper part 2a of the housing. It is for example shaped as an annular ring. The seal 28 is interposed between the test film 3 and the lower end flange 26 of the tube 5. Upon assembly of the housing 2, the seal 28 is compressed between the tube 5 and the film 3, and the O-ring seal 27 is compressed between the cover 4 and the tube 5. The peripheral portion of the test film sample 3 is then interposed (vertically) between the peripheral shoulder 23 and the seal 28. The test film sample 3 is then held in place in the housing 2. Alternatively, the detector 12 may also be assembled to the cover 7 at this stage, as shown in Figure 1e. The detector 12 is then facing the test film sample 3.

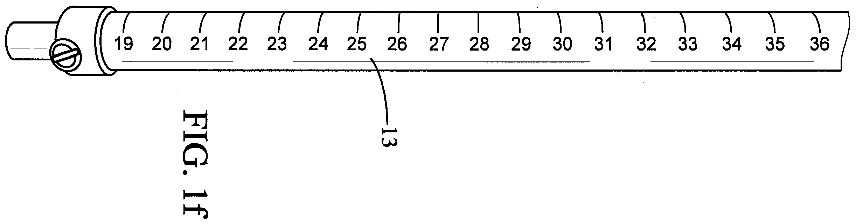

The graduated tube 13 visible in Figure 1f is assembled to the tube 5 in a fluidtight manner.

The upper end 13a of the graduated tube 13 is fluidly connected to a source of fluid, and a determined quantity of fluid is placed in the graduated tube by means of a pump (not shown). In a variant, a determined quantity of fluid is manually poured into the graduated tube 13. We now have the configuration of Figure 1a.

After a predetermined time, a result of the leak test is determined. A result of the leak test may for example be in Boolean form, namely whether or not the test film 3 leaks. To do so, for example, the detector 12 is observed directly.

If necessary, a result of the leak test may be quantitative, meaning it includes information on the nature of the leak. At this stage, this means quantifying the level of fluidtightness.

If necessary, these measurements are repeated over time, characterizing the fluidtightness over time.

### Creation of a database

According to one embodiment of the invention, a database of leak test results is constructed for bag films having different characteristics, exhibiting calibrated defects, and subjected to various mechanical conditions exerted by fluids of diverse mechanical characteristics.

Preferably, the set of tests is carried out with the same leak test device, such as the one presented above, for better reproducibility of results.

Each element of the database can be characterized by two or more of the following characteristics (characteristics either of the film or of the fluid stresses, and result of the test):
- Identity of the constituent material(s) of the film tested,
- Thickness of the film tested,
- Defect applied to the film tested,
- Identity of the constituent material(s) of the fluid tested,
- Mechanical characteristics of the fluid tested (viscosity, temperature,...),
- Hydrostatic pressure applied by the fluid tested to the film tested,
- Results of the leak test

In practice, leak tests, for example as described above, are carried out for a test film sample having a control calibrated defect.

The control defect comprises, for example, one or more through-holes of controlled shape and/or dimensions, created in the test film 3 beforehand. In a prior defect creation step, a LASER beam is used, for example controlled to produce a controlled hole in the test film 3. The characteristics of the LASER beam used to form the defect may be sufficient to characterize the defect. Alternatively, following the generation of the defect, observation of the film is performed (for example by microscopy) in order to characterize the defect.

### This results in a calibrated defect

In practice, when performing a leak test, the identity of the constituent material of the film is indicated in the database (the identity may for example correspond to a commercial name of the film, with no need to specify all the film characteristics which can be very complex).

The thickness of the film is also indicated in the database, which may be intrinsic to the film identity.

The transverse dimensions of the film may also be provided. However, this information can be standardized for the test in question.

A control defect is created in the film, and the characteristics of the control defect are indicated in the database.

The test film 3 is installed in the test device 1.

The fluid stresses exerted by the fluid are characterized. The test fluid is characterized. The identity of the test fluid is therefore indicated in the database (the identity may for example correspond to a commercial name for the fluid, with no need to specify all the fluid characteristics which can be very complex).

The mechanical characteristics of the test fluid are also indicated in the database, for example such as its viscosity, as described by the supplier of the fluid or as determined by an ad hoc test. The temperature of the fluid at the time of the test can also be entered.

A pressure is applied on the film sample. According to one embodiment, a predetermined volume of fluid is placed in the test device, and the volume in question is indicated in the database. This volume is measured, for example, using the graduated tube. The volume of liquid corresponds to the pressure exerted on the film sample. According to another example, additional pressurizing means could be used to pressurize the liquid. These may include, for example, pressurizing gas applied at a predefined pressure above the liquid, or a mechanical pressuring device such as a piston applying a force on the liquid. In any case, the pressure applied on the film sample is measured or estimated and recorded.

The ambient temperature at the time of the test may also be entered. The leak test is carried out, and the result of the test is recorded in the database. In particular, in spite of the presence of a defect in the film, the leak test may be positive (no leak is detected) for the application conditions. Such is the case if the defect is so slight that, considering the hydrostatic pressure exerted on the film and the viscosity of the fluid, the fluid does not pass through the defect. In such case, one could also consider the film having such a defect as remaining intact, despite the presence of a defect.

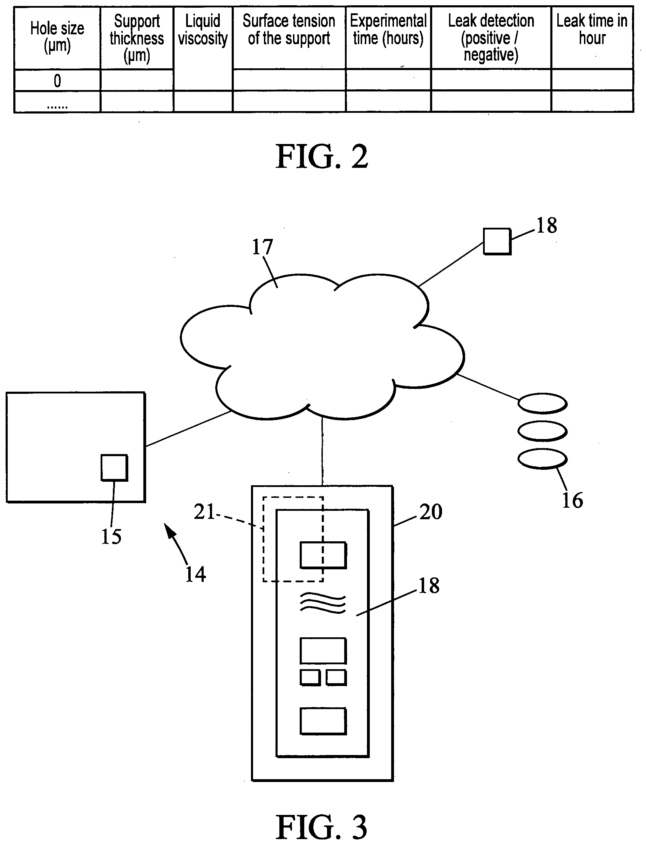

Numerous tests are carried out, varying the above parameters in order to construct the database. In particular, the test can also be carried out for film samples having no defects. Figure 2 shows an example composition of the database. For each test, the following are recorded: the size of the hole in microns, the thickness of the film in microns, the viscosity of the test liquid, the film surface tension (determined from the volume of the fluid), the duration of the test in hours, the Boolean result of the leak test, and the moment at which a leak is detected in hours.

Records in the database can be entered through any known means such as user-machine interfaces, keyboard, joystick, mouse, keypad, touchscreen, microphone, voice recognition software.

### Predictive engine

As represented in Figure 3, a programmable machine 14 is provided, comprising a computer 15 configured to implement a predictive engine. The computer 15 has access to the database 16 described above, possibly via a network 17. The computer 15 also has access to a memory 18 storing input data. The memory 18 may also be accessible to the computer 15 via a network 17. The input data may in particular comprise information relating to a planned use of the bag. The information relating to the planned use may include characteristics (viscosity, temperature, maximum volume (or maximum pressure), etc.) of the biopharmaceutical fluid to be contained in the bag, mechanical conditions of the bag use, duration of the bag use, the intended application (or applications), and the level of fluidtightness required for the bag. The intended applications are for example chosen from the following list: "mixing, culture, transport, storage", which exert different stresses, particularly mechanical, on the bag.

The predictive engine will determine one or more sets of film characteristics that best match the need expressed by the information concerning the intended use. For example, the predictive engine uses a cost function to identify the elements of the database that best meet the need. The different parameters can be assigned different weights in the cost function. For example, failure to meet the required level of fluidtightness can generate a significant cost in the cost function. In particular, the predictive engine makes it possible to determine, for a given type of film, which is the most severe defect that is admissible without loss of fluidtightness.

According to one embodiment, a user is provided with a programmable device 19 provided with an interface 20. The programmable device 19 may be connected to the computer 15 via the network 17, or may access it locally. If necessary, the programmable device 19 comprises the memory 18 but alternatively the memory 18 may be accessed by the programmable device 19 via the network 17. The interface 20 allows the user to enter the information relating to an intended use of the bag, which is then stored in the memory 18. The interface 20 also makes it possible to display the results of the determination made by the computer 15. It should be noted that the programmable device 14 may communicate, to the programmable device 19, only some of the characteristics of the database elements which are selected by the predictive engine in response to the input information.

The programmable device 19 and the programmable machine 14 can therefore each have communication devices (not shown) capable of establishing communication between them via a network 17.

According to one exemplary embodiment, the programmable device 19 comprises a processor 21 executing a computer program enabling the user to access the service. The computer program causes a number of drop-down menus to be displayed on the interface 20. The computer program may in particular comprise an authentication system making it possible to verify that the user has authorization to access the service. The computer program may in particular comprise an input system querying the user on the intended use of the bag and requesting, for example:
- the maximum intended volume,
- the intended duration of use,
- the intended conditions of use (temperatures,...),
- the intended applications (mixing, culture, transport, storage, etc.)
- characteristics of the fluid provided,
- the level of fluidtightness required (for example in the form of a maximum admissible hole size, or in terms of volume leaked after a predetermined time).

Once the input is completed, the data are stored in the memory 18 and sent to the computer 15.

As explained above, the computer 15 determines an element, or a small number of elements, best suited to the entered needs.

The programmable device 19 then obtains, from the database 16, information relating to the determined element or small number of elements, in particular at least the following for an element: the identity, the thickness of the film, and the characteristic of the maximum admissible defect and associated level of fluidtightness. This information may be displayed on the interface 20.

If the user so wishes, a bag having the characteristics of the selected element is then manufactured, in particular in terms of volume, film material, film thickness; or a corresponding previously manufactured bag is selected for sending to the user.

If, after use of the bag, the end user performs a bag integrity test as is known in the art, and this test reveals a defect in the film, the defect detected during the final integrity test can be compared to the maximum admissible defect determined before use, in order to assess whether this defect is representative of a loss of integrity of the bag.

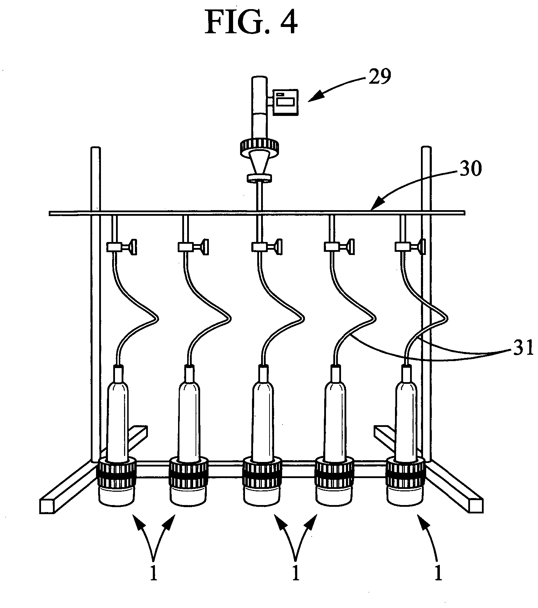

Figure 4 now shows another embodiment of the system. According to this embodiment, a plurality of leak test devices 1 are provided in parallel. In the present example, five leak test devices 1 are provided in parallel. This enables to ensure that ambient conditions when performing tests are similar. In this example, it is also shown a pressuring device 29 applying controlled gas pressure to each of the test devices through a connecting manifold 30 and individual connecting tubes 31. However, the other pressurizing technologies described above for the first embodiment can also be used when a plurality of leak test devices 1 are used in parallel.

For example, the leak test devices 1 shown on Figure 4 may comprise similar film samples with similar calibrated defects, and submitted to the same test conditions (same fluid applied, same pressure applied, ...), so that the various test results are used to improve the signal-to-noise ratio of the test. According to another example, the leak test devices 1 shown on Figure 4 may comprise film samples with different calibrated defects, and submitted to the same test conditions (same fluid applied, same pressure applied, ...). According to another example, the leak test devices 1 shown on Figure 4 may comprise different film samples (material, thickness, ...) with the same calibrated defects, and submitted to the same test conditions (same fluid applied, same pressure applied, ...). Alternatively, the leak test devices 1 shown on Figure 4 may comprise the same film samples (material, thickness, ...) with the same calibrated defects, and submitted to different test conditions (same fluid applied, same pressure applied, ...).

## Claims

1. A method for characterization of a calibrated defect of a film of a bag for biopharmaceutical fluid, wherein said method comprises the following steps:
a film sample (3) provided with a calibrated defect is installed in a test device (1), a leak test is applied to the film sample (3) provided with a calibrated defect, in the test device (1), by applying controlled fluid stresses to the film sample (3) provided with a calibrated defect,
wherein the leak test includes placing the film sample (3) in a housing (2) of the test device (1), the housing (2) comprising an upper part (2a) and a lower part (2b) which are detachable from one another, between which the film sample (3) is held in a fluidtight manner, the upper part (2a) of the housing being connected in a fluidtight manner to a column of fluid to enable the application of a fluid to a first face of the film sample (3), a second face of the film sample (3), opposite the first side, facing a detector (12),
wherein a result of the leak test is measured, and characteristics of the film sample (3) provided with a calibrated defect, characteristics of the controlled fluid stresses, and the result of the leak test are recorded in a database (16).

2. Method for characterization according to claim 1, wherein the characteristics of the fluid stresses comprise one or more of:
- a hydrostatic pressure of a fluid applied to the film sample provided with a calibrated defect,
- a viscosity of a fluid applied to the film sample provided with a calibrated defect.

3. Method for characterization according to one of claims 1 to 2, wherein the characteristics of the film sample (3) provided with a calibrated defect comprise one or more of:
- an identifier of a constituent film of a bag (3),
- a thickness of a constituent film of a bag (3).

4. Method for characterization according to any one of claims 1 to 3, wherein the leak test includes the application of a column of fluid of known height, known viscosity, known temperature, under known ambient conditions, to a film sample (3) of known material, known thickness, known defect, for a known duration, and the detection over time of the passage of said fluid through said film sample (3).

5. Method for characterization according to according to any one of the preceding claims, wherein the upper part (2a) of the housing (2) comprises a cover (4) and a tube (5) provided with a lower end flange (26),
and wherein a seal (28) is applied to an inside face of the test film sample (3), which is the first face, the seal (28) being interposed between the test film sample (3) and the lower end flange (26) of the tube (5).

6. Method for characterization according to claim 5, wherein the tube (5) is graduated and/or is connected in a fluidtight manner to a graduated tube (13).

7. Method for building a database (16), wherein the method for characterization according to any one of claims 1 to 6 is implemented for different film samples (3) provided with calibrated defects and for various controlled fluid stresses.

8. A system for characterization of a calibrated defect of a film of a bag for biopharmaceutical fluid, wherein said system comprises:
- a test device (1) provided with a housing (2),
- a film sample (3) provided with a calibrated defect, the film sample (3) being installed in the housing (2),
- a fluid applying controlled fluid stresses to the film sample (3) provided with a calibrated defect in the test device (1), allowing to conduct a leak test,
- a measurement device for measuring a result of a leak test,
- recording means to record characteristics of the film sample (3) provided with a calibrated defect, characteristics of the controlled fluid stresses, and the result of the leak test in a database (16),
wherein the housing (2) comprises an upper part (2a) and a lower part (2b) which are detachable from one another, between which the film sample (3) is held in a fluidtight manner, the upper part (2a) of the housing (2) being connected in a fluidtight manner to a column of fluid to enable the application of a fluid to a first face of the film sample (3), a second face of the film sample (3), opposite the first side, facing a detector (12) of the measurement device.

9. The system according to claim 8, wherein the upper part (2a) of the housing (2) comprises a cover (4) and a tube (5) provided with a lower end flange (26),
and wherein a seal (28) is applied to an inside face of the test film sample (3), which is the first face, the seal (28) being interposed between the test film sample (3) and the lower end flange (26) of the tube (5).

10. Computerized method for obtaining characteristics of a film for a bag for biopharmaceutical fluid content, the bag comprising at least one film, wherein a database (16) is built according to the method of claim 7, said database (16) containing results of leak tests previously carried out for film samples provided with calibrated defects subjected to various fluid stresses,
wherein in the computerized method:
- by means of an interface (20) of a programmable machine, a user provides information relating to the intended use of the bag, said information relating to the intended use of the bag comprising at least one of the following items of information: characteristics of the biopharmaceutical fluid to be contained in the bag, mechanical conditions of the bag use, duration of the bag use, ambient conditions, level of fluidtightness required for the bag,
- the programmable machine receives, from a computer (15) configured to run a predictive engine, characteristics of at least one film that best matches the need expressed by the information concerning the intended use that is determined by comparing said information relating to the intended use of the bag with said database (16),
- a processor (21) causes said characteristics to be displayed on the interface (20).

11. The computerized method according to claim 10, wherein the processor (21) is a processor of the programmable machine.

12. Computerized method according to claim 10 or 11, wherein said characteristics comprise a maximum admissible defect of the film.

13. Computerized method for characterization according to one of claims 10 to 12, wherein the programmable machine and the computer (15) communicate via a network (17).

## Patentansprüche

1. Verfahren zur Charakterisierung eines kalibrierten Defekts eines Films eines Beutels für biopharmazeutisches Fluid, wobei das Verfahren die folgenden Schritte umfasst:
eine Filmprobe (3), die mit einem kalibrierten Defekt versehen ist, wird in einer Testvorrichtung (1) eingerichtet,
ein Dichtheitstest wird auf der Filmprobe (3), die mit einem kalibrierten Defekt versehen ist, in der Testvorrichtung (1) durch Anwenden gesteuerter Fluidbeanspruchungen auf die mit einem kalibrierten Defekt versehene Filmprobe (3) angewandt,
wobei der Dichtheitstest das Platzieren der Filmprobe (3) in einem Gehäuse (2) der Testvorrichtung (1) umfasst, wobei das Gehäuse (2) einen oberen Teil (2a) und einen unteren Teil (2b) umfasst, die voneinander abnehmbar sind und zwischen denen die Filmprobe (3) auf eine fluiddichte Weise gehalten wird, wobei der obere Teil (2a) des Gehäuses auf eine fluiddichte Weise mit einer Fluidsäule verbunden wird, um die Anwendung eines Fluids auf eine erste Seite der Filmprobe (3) zu ermöglichen, wobei eine zweite Seite der Filmprobe (3), die der ersten Seite entgegengesetzt ist, einem Detektor (12) zugewandt ist,
wobei ein Ergebnis des Dichtheitstests gemessen wird und Eigenschaften der mit einem kalibrierten Defekt versehenen Filmprobe (3), Eigenschaften der gesteuerten Fluidbeanspruchungen und das Ergebnis des Dichtheitstests in einer Datenbank (16) aufgezeichnet werden.

2. Verfahren zur Charakterisierung nach Anspruch 1, wobei die Eigenschaften der Fluidbeanspruchungen eines oder mehrere von Folgenden umfassen:
- einen hydrostatischen Druck eines auf die mit einem kalibrierten Defekt versehene Filmprobe angewandten Fluids,
- einer Viskosität eines auf die mit dem kalibrierten Defekt versehene Filmprobe angewandten Fluids.

3. Verfahren zur Charakterisierung nach einem der Ansprüche 1 bis 2, wobei die Eigenschaften der mit einem kalibrierten Defekt versehenen Filmprobe (3) eines oder mehrere von Folgenden umfassen:
- eine Kennung eines Films, aus dem ein Beutel (3) besteht,
- eine Dicke eines Films, aus dem ein Beutel (3) besteht.

4. Verfahren zur Charakterisierung nach einem der Ansprüche 1 bis 3, wobei der Dichtheitstest die Anwendung einer Fluidsäule mit bekannter Höhe, bekannter Viskosität, bekannter Temperatur, unter bekannten Umgebungsbedingungen auf eine Filmprobe (3) aus bekannten Material, mit bekannter Dicke, bekanntem Defekt, während einer bekannten Dauer und die Detektion des Durchgangs des Fluids durch die Filmprobe (3) über die Zeit umfasst.

5. Verfahren zur Charakterisierung nach einem der vorhergehenden Ansprüche, wobei der obere Teil (2a) des Gehäuses (2) eine Abdeckung (4) und ein Rohr (5) umfasst, das mit einem unteren Endflansch (26) versehen ist,
und wobei eine Dichtung (28) auf eine Innenseite der Testfilmprobe (3) aufgebracht wird, welche die erste Seite ist, wobei die Dichtung (28) zwischen der Testfilmprobe (3) und dem unteren Endflansch (26) des Rohrs (5) angeordnet ist.

6. Verfahren zur Charakterisierung nach Anspruch 5, wobei das Rohr (5) eine Skaleneinteilung aufweist und/oder auf eine fluiddichte Weise mit einem Rohr (13) mit Skaleneinteilung verbunden ist.

7. Verfahren zum Aufbauen einer Datenbank (16), wobei das Verfahren zur Charakterisierung nach einem der Ansprüche 1 bis 6 für unterschiedliche Filmproben (3), die mit kalibrierten Defekten versehen sind, und für verschiedene gesteuerte Fluidbeanspruchungen implementiert wird.

8. System zur Charakterisierung eines kalibrierten Defekts eines Films eines Beutels für biopharmazeutisches Fluid, wobei das System Folgendes umfasst:
- eine Testvorrichtung (1), die mit einem Gehäuse (2) versehen ist,
- eine Filmprobe (3), die mit einem kalibrierten Defekt versehen ist, wobei die Filmprobe (3) in dem Gehäuse (2) eingerichtet ist,
- ein Fluid, das gesteuerte Fluidbeanspruchungen auf die mit einem kalibrierten Defekt versehene Filmprobe (3) in der Testvorrichtung (1) anwendet, wodurch das Durchführen eines Dichtheitstests ermöglicht wird,
- eine Messvorrichtung zum Messen eines Ergebnisses eines Dichtheitstests,
- Aufzeichnungsmittel zum Aufzeichnen von Eigenschaften der mit einem kalibrierten Defekt versehenen Filmprobe (3), Eigenschaften der gesteuerten Fluidbeanspruchungen und des Ergebnisses des Dichtheitstests in einer Datenbank (16),
wobei das Gehäuse (2) einen oberen Teil (2a) und einen unteren Teil (2a) umfasst, die voneinander abnehmbar sind und zwischen denen die Filmprobe (3) auf eine fluiddichte Weise gehalten wird, wobei der obere Teil (2a) des Gehäuses (2) auf eine fluiddichte Weise mit einer Fluidsäule verbunden ist, um die Anwendung eines Fluids auf eine erste Seite der Filmprobe (3) zu ermöglichen, wobei eine zweite Seite der Filmprobe (3), die der ersten Seite entgegengesetzt ist, einem Detektor (12) der Messvorrichtung zugewandt ist.

9. System nach Anspruch 8, wobei der obere Teil (2a) des Gehäuses (2) eine Abdeckung (4) und ein Rohr (5) umfasst, das mit einem unteren Endflansch (26) versehen ist,
und wobei eine Dichtung (28) auf eine Innenseite der Testfilmprobe (3) aufgebracht ist, welche die erste Seite ist, wobei die Dichtung (28) zwischen der Testfilmprobe (3) und dem unteren Endflansch (26) des Rohrs (5) angeordnet ist.

10. Computerisiertes Verfahren zum Erhalten von Eigenschaften eines Films für einen Beutel für biopharmazeutischen Fluidinhalt, wobei der Beutel mindestens einen Film umfasst, wobei eine Datenbank (16) nach dem Verfahren von Anspruch 7 aufgebaut wird, wobei die Datenbank (16) Ergebnisse von Dichtheitstests enthält, die vorhergehend für mit kalibrierten Defekten versehene Filmproben durchgeführt wurden, die verschiedenen Fluidbeanspruchungen ausgesetzt wurden,
wobei in dem computerisierten Verfahren:
- ein Benutzer mittels einer Schnittstelle (20) einer programmierbaren Maschine Informationen bereitstellt, welche die beabsichtigte Verwendung des Beutels betreffen, wobei die Informationen, welche die beabsichtigte Verwendung des Beutels betreffen, mindestens eines von den folgenden Informationselementen umfassen: Eigenschaften des biopharmazeutischen Fluids, das in dem Beutel enthalten sein soll, mechanische Bedingungen der Beutelverwendung, Dauer der Beutelverwendung, Umgebungsbedingungen, Niveau der für den Beutel erforderlichen Fluiddichtheit,
- die programmierbare Maschine von einem Computer (15), der dazu ausgestaltet ist, eine prädiktive Maschine auszuführen, Eigenschaften von mindestens einem Film empfängt, der am besten zu dem Erfordernis passt, das von den Informationen ausgedrückt wird, welche die beabsichtigte Verwendung betreffen, der durch Vergleichen der Informationen, welche die beabsichtigte Verwendung des Beutels betreffen, mit der Datenbank (16) bestimmt wird,
- ein Prozessor (21) veranlasst, dass die Eigenschaften auf der Schnittstelle (20) angezeigt werden.

11. Computerisiertes Verfahren nach Anspruch 10, wobei der Prozessor (21) ein Prozessor der programmierbaren Maschine ist.

12. Computerisiertes Verfahren nach Anspruch 10 oder 11, wobei die Eigenschaften einen maximal zulässigen Defekt des Films umfassen.

13. Computerisiertes Verfahren zur Charakterisierung nach einem der Ansprüche 10 bis 12, wobei die programmierbare Maschine und der Computer (15) über ein Netzwerk (17) kommunizieren.

## Revendications

1. Procédé de caractérisation d'un défaut calibré d'un film d'un sac pour fluide biopharmaceutique, dans lequel ledit procédé comprend les étapes suivantes :
un échantillon de film (3) fourni avec un défaut calibré est installé dans un dispositif de test (1), un test d'étanchéité est appliqué sur l'échantillon de film (3) doté d'un défaut calibré, dans le dispositif de test (1), en appliquant des contraintes de fluide contrôlées sur l'échantillon de film (3) doté d'un défaut calibré,
dans lequel le test d'étanchéité comprend la mise en place de l'échantillon de film (3) dans un boîtier (2) du dispositif de test (1), le boîtier (2) comprenant une partie supérieure (2a) et une partie inférieure (2b) qui sont détachables l'une de l'autre, entre lesquelles l'échantillon de film (3) est maintenu d'une manière fluidique, la partie supérieure (2a) du boîtier étant raccordée d'une manière fluidique à une colonne de fluide pour permettre l'application d'un fluide sur une première face de l'échantillon de film (3), une seconde face d'échantillon de film (3), opposée au premier côté, faisant face à un détecteur (12),
dans lequel un résultat de l'échantillon de fuite est mesuré et les caractéristiques de l'échantillon de film (3) prévues avec le défaut calibré, les caractéristiques des contraintes de fluide contrôlées et le résultat du test d'étanchéité sont enregistrés dans une base de données (16).

2. Procédé de caractérisation selon la revendication 1, dans lequel les caractéristiques des contraintes de fluide comprennent une ou plusieurs parmi :
- une pression hydrostatique d'un fluide appliqué sur l'échantillon de film doté d'un défaut calibré,
- une viscosité d'un fluide appliqué sur l'échantillon de film doté d'un défaut calibré.

3. Procédé de caractérisation selon l'une des revendications 1 à 2, dans lequel les caractéristiques de l'échantillon de film (3) doté d'un défaut calibré comprennent un ou plusieurs parmi :
- un dispositif d'identification d'un film de constitution d'un sac (3),
- une épaisseur d'un film de constitution d'un sac (3).

4. Procédé de caractérisation selon l'une quelconque des revendications 1 à 3, dans lequel le test d'étanchéité comprend l'application d'une colonne de fluide de hauteur connue, de viscosité connue, de température connue, dans des conditions ambiantes connues, sur un échantillon de film (3) de matériau connu, d'épaisseur connue, de défaut connu, pendant une durée connue et la détection au fil du temps du passage dudit fluide à travers ledit échantillon de film (3).

5. Procédé de caractérisation selon l'une quelconque des revendications précédentes, dans lequel la partie supérieure (2a) du boîtier (2) comprend un couvercle (4) et un tube (5) prévu avec une bride d'extrémité inférieure (26),
et dans lequel un joint d'étanchéité (28) est appliqué sur une face intérieure de l'échantillon de film de test (3) qui est la première face, le joint d'étanchéité (28) étant intercalé entre le premier échantillon de film de test (3) et la bride d'extrémité inférieure (26) du tube (5).

6. Procédé de caractérisation selon la revendication 5, dans lequel le tube (5) est gradué et/ou est raccordé, de manière étanche au fluide, à un tube gradué (13).

7. Procédé de construction d'une base de données (16), dans lequel le procédé de caractérisation selon l'une quelconque des revendications 1 à 6 est mis en œuvre pour différents échantillons de film (3) dotés de défauts calibrés et pour différentes contraintes de fluide contrôlées.

8. Système de caractérisation d'un défaut calibré d'un film d'un sac pour fluide biopharmaceutique, dans lequel ledit système comprend :
- un dispositif de test (1) prévu avec un boîtier (2),
- un échantillon de film (3) doté d'un défaut calibré, l'échantillon de film (3) étant installé dans le boîtier (2),
- un fluide appliquant des contraintes de fluide contrôlées sur l'échantillon de film (3) doté d'un défaut calibré dans le dispositif de test (1), permettant de réaliser un test d'étanchéité,
- un dispositif de mesure pour mesurer un résultat de test d'étanchéité,
- des moyens d'enregistrement pour enregistrer les caractéristiques de l'échantillon de film (3) doté d'un défaut calibré, les caractéristiques des contraintes de fluide contrôlées, et le résultat du test d'étanchéité dans une base de données (16),
dans lequel le boîtier (2) comprend une partie supérieure (2a) et une partie inférieure (2b) qui sont détachables l'une de l'autre, entre lesquelles l'échantillon de film (3) est maintenu d'une manière étanche au fluide, la partie supérieure (2a) du boîtier (2) étant raccordée d'une manière étanche au fluide à une colonne de fluide pour permettre l'application d'un fluide sur une première face de l'échantillon de film (3), une seconde face de l'échantillon de film (3), opposée au premier côté, faisant face à un détecteur (12) du dispositif de mesure.

9. Système selon la revendication 8, dans lequel la partie supérieure (2a) du boîtier (2) comprend un couvercle (4) et un tube (5) prévu avec une bride d'extrémité inférieure (26),
et dans lequel un joint d'étanchéité (28) est appliqué sur une face intérieure de l'échantillon de film de test (3), qui est la première face, le joint d'étanchéité (28) étant intercalé entre le premier échantillon de film de test (3) et la bride d'extrémité inférieure (26) du tube (5).

10. Procédé informatisé pour obtenir les caractéristiques d'un film pour un sac pour un contenu de fluide biopharmaceutique, le sac comprenant au moins un film, dans lequel une base de données (16) est construite selon la revendication 7, ladite base de données (16) contenant des résultats de tests d'étanchéité précédemment réalisés pour les échantillons de film dotés de défauts calibrés soumis à différentes contraintes de fluide,
dans lequel le procédé informatisé :
- au moyen d'une interface (20) d'une machine programmable, un utilisateur fournit des informations concernant l'utilisation prévue du sac, lesdites informations concernant l'utilisation prévue du sac comprenant au moins l'un des éléments d'information suivants : les caractéristiques du fluide biopharmaceutique destiné à être contenu dans le sac, les conditions mécaniques d'utilisation du sac, la durée d'utilisation du sac, les conditions ambiantes, le niveau d'étanchéité au fluide nécessaire pour le sac,
- la machine programmable reçoit, à partir d'un ordinateur (15) configuré pour faire fonctionner un moteur prédictif, des caractéristiques d'au moins un film qui correspond mieux au besoin exprimé par les informations concernant l'utilisation prévue qui est déterminée en comparant ladite information concernant l'utilisation prévue du sac avec ladite base de données (16),
- un processeur (21) provoque l'affichage desdites caractéristiques sur l'interface (20).

11. Procédé informatisé selon la revendication 10, dans lequel le processeur (21) est un processeur de la machine programmable.

12. Procédé informatisé selon la revendication 10 ou 11, dans lequel lesdites caractéristiques comprennent un défaut maximum admissible du film.

13. Procédé informatisé de caractérisation selon l'une des revendications 10 à 12, dans lequel la machine programmable et l'ordinateur (15) communiquent via un réseau (17).
